# EUROPÄISCHE PATENTSCHRIFT

(11) **EP 1 973 658 B1**
(45) Veröffentlichungstag und Bekanntmachung des Hinweises auf die Patenterteilung: **02.12.2015**
(21) Anmeldenummer: 07702740.7
(22) Anmeldetag: 12.01.2007
(51) Int. Cl.: B01L 3/00, B65D 1/36, B65D 43/16

(54) **VERPACKUNGSKASSETTE FÜR REAGENZIENTRÄGER**
PACKAGING CASSETTE FOR REAGENT CARRIERS
CASSETTE D'EMBALLAGE POUR SUPPORTS DE RÉACTIFS

(30) Priorität: 13.01.2006 DE 102006001881
(43) Veröffentlichungstag der Anmeldung: 01.10.2008
(73) Patentinhaber: F.Hoffmann-La Roche AG, 4070 Basel (CH); Roche Diagnostics GmbH, 68305 Mannheim (DE)
(72) Erfinder: SATTLER, Stephan, 82319 Starnberg (DE); KRAEMER, Reinhold, 82380 Peissenberg (DE)
(74) Vertreter: Weickmann & Weickmann
(86) Internationale Anmeldenummer: PCT/EP2007/000268
(87) Internationale Veröffentlichungsnummer: WO 2007/082696

(56) Entgegenhaltungen:
- EP-A1- 0 642 828
- EP-A1- 0 798 228
- DE-A1- 19 734 135
- FR-A1- 2 864 826
- US-A- 4 741 441
- US-A- 4 793 492
- US-A- 5 558 229
- US-A1- 2002 170 911

## Beschreibung

Die Erfindung betrifft eine Verpackungskassette für Reagenzienträger.

Aus der Druckschrift DE 197 34 135 A1 ist eine Verpackungskassette für flüssige Reagenzienträger bekannt, wobei die Verpackungskassette ein Basisgehäuse mit benachbart angeordneten reagenzglasförmigen Abteilen aufweist, in denen ein flüssiger Reagenzienträger aufgenommen werden kann, wobei die Abteile durch Abstände zwischen den reagenzglasförmigen Abteilen voneinander separiert und einzeln zu öffnen sind und jedes Abteil einen eigenen Verschlussdeckel aufweist, der ein Wiederverschließen des Abteils ermöglicht, wobei die Verschlussdeckel Klappendeckel sind, die gelenkig an dem Basisgehäuse befestigt sind und das Basisgehäuse und die Klappendeckel einstückig zusammenhängend, insbesondere als einteiliges Spritzgussprodukt, gefertigt sind.

Aus der Druckschrift US 2002/170911 A1 ist eine Verpackungskassette für flüssige Reagenzienträger bekannt, wobei die Verpackungskassette aus mehreren benachbart angeordneten reagenzglasförmigen Abteilen besteht, die über durch Knicken auftrennbare Verbindungsbereiche mit Abstand zueinander in Reihe angeordnet sind und in denen ein flüssiger Reagenzienträger aufgenommen werden kann, wobei die Abteile einzeln zu öffnen sind und jedes Abteil einen eigenen Verschlussdeckel aufweist, der ein Wiederverschließen des Abteils ermöglicht, wobei die Verschlussdeckel Klappendeckel sind, die gelenkig an denVerbindungsbereichen befestigt sind und wobei alle Elemente einstückig zusammenhängend gefertigt sind.

Aus der Druckschrift EP 0 567 067 A1 ist eine längliche Kassette zur gestappelten Lagerung einer Vielzahl von trockenen Analysefilmchips bekannt, die ein Trockemittelreservoir in einem der Öffnung zur Entnahme der Analysefilmchips gegenüberliegenden Deckelbereich umfasst.

Reagenzienträger der in Bezug auf die Erfindung betrachteten Art sind Testchips, z.B. Biochips zum Nachweis von Analyten in einer Probenflüssigkeit. Sie können z.B. bei Immunoassay-Anwendungen zum Einsatz kommen, bei denen Bindungsreaktionen zwischen Reaktanden, die an einer Testfläche des Reagenzienträgers vorzugsweise immobilisiert sind, und Analyten, die in einer die Testfläche benetzenden Probenflüssigkeit vorhanden sind, nachgewiesen werden. Diese nachstehend auch als Chips bezeichneten Reagenzienträger sind bis zu ihrer bestimmungsgemäßen Verwendung geschützt zu behandeln und zu handhaben, damit unerwünschte Kontaminationen vermieden werden und die Reaktanden ihre spezifische Bindefähigkeit für die Probenanalyten behalten.

Die Basisgehäuse der Reagenzienträger können aus diversen Festkörpermaterialien, insbesondere auch aus Kunststoff gebildet sein.

Solche Kunststoffchips können z. B. nach ihrer Herstellung im Spritzgussverfahren mit "Trockenchemie" beschichtet werden, etwa unter Anwendung eines Microspot-Verfahrens, um die Reaktand-Moleküle an der Testfläche des Chips zu immobilisieren. Ein solches Beschichten erfolgt üblicherweise automatisiert in einer Beschichtungsanlage. Die Chips sind nach dem Beschichten und Trocknen einsatzfertig präpariert. Sie sind dann in einer Verpackung unterzubringen, die einen Schutz vor Umgebungseinflüssen bietet.

Bis zum Einsatz der einzelnen Chips für medizinische oder chemische Untersuchungen können durchaus mehrere Wochen vergehen. Es sind daher an die Verpackungen hinsichtlich der Abschottung der Chips gegenüber Umgebungseinflüssen, wie schwankende Luftfeuchtigkeit, schwankende Temperatur, Staub etc., hohe Anforderungen zu stellen.

Ferner sollte eine automatische Handhabung der Verpackung sowohl beim Bestücken mit den neu hergestellten Chips in Bestückungsautomaten als auch bei der kundenseitigen Benutzung der Chips in Analysegeräten möglich sein. Dabei sollten die automatisierten Abläufe bei der herstellerseitigen Verpackungsbestückung und bei der kundenseitigen Chipbenutzung möglichst einfach und platzsparend zu gestalten sein. Nach den Vorstelungen der Erfinder sollte die Verpackung dazu geeignet sein, eine Vielzahl von Chips in geschützter Weise aufzunehmen und sicherstellen, dass nach Anbrechen der Verpackung zur Verwendung einiger - aber nicht aller Chips die nicht zur momentanen Verwendung vorgesehenen Chips weiterhin geschützt in der Verpackung verbleiben können, bis sie zur Benutzung anstehen.

Diesen Forderungen genügt eine erfindungsgemäße Kombination aus Verpackungskassette und Reagenzienträgerchips, die jeweils eine wannenartige Vertiefung aufweisen, deren Boden einen Testflächenbereich bildet, in dem eine Beschichtung mit immobilisierten Reagenzien vorgesehen ist, wobei die Verpackungskassette ein Basisgehäuse mit zusammenhängend einander benachbart, insbesondere nebeneinander oder/und übereinander angeordneten Abteilen für die Reagenzienträger aufweist, wobei die Abteile durch Trennwände voneinander separiert und einzeln zu öffnen sind, wobei jedes Abteil einen eigenen Verschlussdeckel aufweist, der ein Wiederverschließen des Abteils ermöglicht, wobei die Verschlussdeckel Klappendeckel sind, die gelenkig an dem Basisgehäuse befestigt sind und das Basisgehäuse und die Klappendeckel einstückig zusammenhängend, insbesondere als einteiliges Spritzgussprodukt, gefertigt sind, wobei jedem Abteil ein Trockenmittelreservoir zugeordnet ist, wobei das Trockenmittelreservoir im Bodenbereich des Basisgehäuses vorgesehen ist, wobei jedes Trockenmittelreservoir einem oder mehreren Abteilen zugeordnet ist und zwischen diesen Trockenmittelreservoiren und den ihnen zugeordneten Abteilen jeweils ein Verbindungsloch vorgesehen ist.

Die Kassettengeometrie erlaubt eine platzsparende und preisgünstige Realisierung der Verpackungskassette, wobei die Reihenanordnung der Abteile eine automatisierte Handhabung der Verpackungskassette erleichtert. Da die einzelnen Abteile gesondert voneinander zu öffnen sind, können bei einem Untersuchungsvorgang jeweils so viele Chips aus der Kassette verwendet werden, wie es für den Untersuchungsvorgang erforderlich ist, ohne dass die übrigen Chips in der Kassette damit Umgebungseinflüssen ausgesetzt und somit zwangsweise mitverbraucht werden müssten. Jedes Abteil der Verpackungskassette weist einen eigenen Verschlussdeckel auf, der ein Wiederverschließen des Abteils ermöglicht. Von der Wiederverschließbarkeit der Abteile kann z.B. bei der herstellerseitigen Präparation der Reagenzienträger Gebrauch gemacht werden, z.B. in dem bevorzugten Fall, dass die noch nicht mit Reaktanden präparierten Reagenzienträger in der Verpackungskassette angeliefert werden, dann außerhalb der Verpackungskassette oder ggf. innerhalb der Verpackungskassette mit den betreffenden Reagenzien beschichtet werden und nach dem Beschichten und Trocknen schließlich wieder geschützt in der Verpackungskassette untergebracht werden. Die Wiederverschließmöglichkeit der einzelnen Abteile der Verpackungskassette sollte ohnehin vorgesehen sein, falls die Verpackungskassette nicht als Einwegprodukt, sondern als nach Gebrauch wieder neu zu bestückende Verpackungskassette verwendet werden soll. Bevorzugt handelt es sich bei der Verpackungskassette nach der Erfindung jedoch um eine Einweg-Verpackungskassette, die nach Verbrauch ihrer Reagenzienträger ebenfalls als verbraucht behandelt und in den Recycling-Müll überführt werden sollte. Dabei kann die Situation gegeben sein, dass auch die verbrauchten Reagenzienträger in der Verpackungskassette verbleiben sollen. Auch für diesen Fall ist die Wiederverschließbarkeit der Abteile von Bedeutung.

Gemäß einer bevorzugten Ausführungsform der Erfindung weisen die Verschlussdeckel und das Basisgehäuse der Verpackungskassette einander zugeordnete und komplementäre Verschlusselemente auf, die beim Verschließen der Abteile mittels der Verschlussdeckel abdichtend miteinander in klemmenden Eingriff oder in Schnappeingriff kommen. Solche Schnappverschlusselemente lassen sich auf einfache Weise anformen bzw. in einem gemeinsamen Herstellungsprozess mit dem Basisgehäuse und den Verschlussdeckeln ausbilden. Die Verschlusselemente können zudem die Dichtungsfunktion übernehmen, so dass die Abteile im verschlossenen Zustand sehr gut gegen äußere Feuchtigkeitseinflüsse und Staub abgedichtet sind. Wie oben beschrieben, handelt es sich bei den Verschlussdeckeln um Klappendeckel, die gelenkig an dem Basisgehäuse befestigt sind. Klappendeckel haben den Vorteil, dass sie mit einfachen Mitteln sowohl manuell als auch automatisiert betätigt werden können und unverlierbar am Basisgehäuse festgelegt sind. Bei der Verpackungskassette sind das Basisgehäuse und die Klappendeckel einstückig zusammenhängend, insbesondere als einteiliges Spritzgussprodukt gefertigt Die Schwenkbarkeit der Klappendeckel für die Offnungs- und Schließbewegungen kann durch "Filmscharniere" sichergestellt werden, also durch dünnwandige Übergänge zwischen den Verschlussdeckeln und dem Basisgehäuse. Vorzugsweise ist die Verpackungskassette aus einem Kunststoff gefertigt. Dabei kann es gemäß einer Ausführungsform der Erfindung zweckmäßig sein, die Verpackungskassette aus dem gleichen Material herzustellen wie die noch nicht mit Reagenzien präparierten Reagenzienträger. Verpackungskassette und Reagenzienträgerkörper können somit aus ein und derselben Ursprungsproduktion stammen.

Wie schon angesprochen, kommt die Spritzgusstechnik als bevorzugte Herstellungstechnik für die Verpackungskassetten und ggf. die Reagenzienträgerkörper in Frage, wenngleich auch andere Herstellungsverfahren, wie z.B. die Blasformtechnik, in Frage kommen. Auch soll nicht ausgeschlossen sein, dass die Verpackungskassette und die Reagenzienträgerkörper aus unterschiedlichen Materialien hergestellt sind und aus unterschiedlichen Produktionen stammen.

Vorzugsweise ist jeder Verschlussdeckel mit einer Betätigungslasche versehen, wobei die im Wesentlichen gleich ausgebildeten Betätigungslaschen der einer Reihe von Abteilen zugeordneten Verschlussdeckel im Schließzustand der Reihe nach nebeneinander liegend bzw. übereinander liegend über einen Rand des Basisgehäuses hinaus nach außen abstehen. Die Betätigungslaschen erleichtern die Ineingriffnahme der Verschlussdeckel beim manuellen oder ggf. maschinellen Öffnen und Schließen der Abteile. Ferner erleichtern die wie vorstehend angegeben angeordneten Betätigungslaschen das simultane maschinelle Öffnen und Schließen mehrerer und ggf. aller Abteile, falls dies gewünscht ist.

Unter dem Aspekt der einfachen Herstellbarkeit und der Sparsamkeit beim Materialaufwand wird vorgeschlagen, dass das Basisgehäuse im Wesentlichen aus einer Basisplatte besteht, in der die Abteile sämtlich oder ggf. gruppenweise als in Reihe zueinander ausgerichtete Mulden eingeprägt sind, die durch die angeformten Klappendeckel zu verschließen sind. Mit dem Hinweis auf die ggf. gruppenweise in Reihe zueinander ausgerichteten Mulden soll dargelegt werden, dass die Verpackungskassette mehrere Reihen von Abteilen aufweisen kann. Eine bevorzugte Ausführungsform der Erfindung jedoch sieht eine einreihige Anordnung von im Wesentlichen gleich ausgebildeten Abteilen vor.

Die Abteile sind vorzugsweise so dimensioniert und platzbedarfsoptimiert, dass sie jeweils im Wesentlichen nur einen einzelnen Reagenzienträger und ggf. einen kleinen Trockenmittelvorrat aufnehmen können. Bei der Raumoptimierung, welche eine Minimierung des den Reagenzienträger in seinem geschlossenen Abteil umgebenden Luftraums beinhalten sollte, kann es vorgesehen sein, dass die Verschlussdeckel nach innen vorstehende Ausbauchungen aufweisen, welche vom Reagenzienträger nicht beanspruchten Platz im Abteil im Schließzustand ausfüllen.

Erfindungsgemäß ist jedem Abteil ein Trockenmittelreservoir zugeordnet, welches eine Menge eines Trockenmittels, z.B. hygroskopischen Materials, aufnehmen kann. Das Trockenmittelreservoir eines Abteils ist im Bodenbereich des Basisgehäuses vorgesehen, wobei muldenförmige Ausbauchungen mit Kommunikationslöchern die Trockenmittelreservoire bilden können. Nach außen hin sind auch die Trockenmittelreservoire im Bodenbereich des Basisgehäuses bevorzugt durch Versiegelungsfolien abgedichtet. Die vorstehend als Trockenmittelreservoire beschriebenen Hohlräume oder Mulden können alternativ oder zusätzlich auch als Reservoire für Flüssigreagenzien oder Trockenreagenzien verwendet werden, die den Reagenzienträgern zugeordnet sind.

Die Verpackungskassette kann z.B. per Inkjet oder dgl. direkt bedruckt bzw. beschriftet werden. Als Informationsträger auf der Verpackungskassette kommen auch Klebefolien oder Siegelfolien in Frage.

Ausführungsbeispiele der Erfindung werden nachstehend unter Bezugnahme auf die Figuren näher erläutert.
- Fig. 1: zeigt in einer perspektivischen Ansicht von oben ein erstes Ausführungsbeispiel einer Verpackungskassette nach der Erfindung mit geöffneten und geschlossenen Abteilen für Reagenzienträger.
- Fig. 2: zeigt die Verpackungskassette aus Fig. 1 in einer perspektivischen Ansicht von unten.
- Fig. 3: zeigt eine nicht erfindungsgemäße Verpackungskassette in einer perspektivischen Ansicht von oben.
- Fig. 4a-4c: zeigen ein zweites Ausführungsbeispiel einer Verpackungskassette nach der Erfindung in perspektivischen Ansichten, wobei

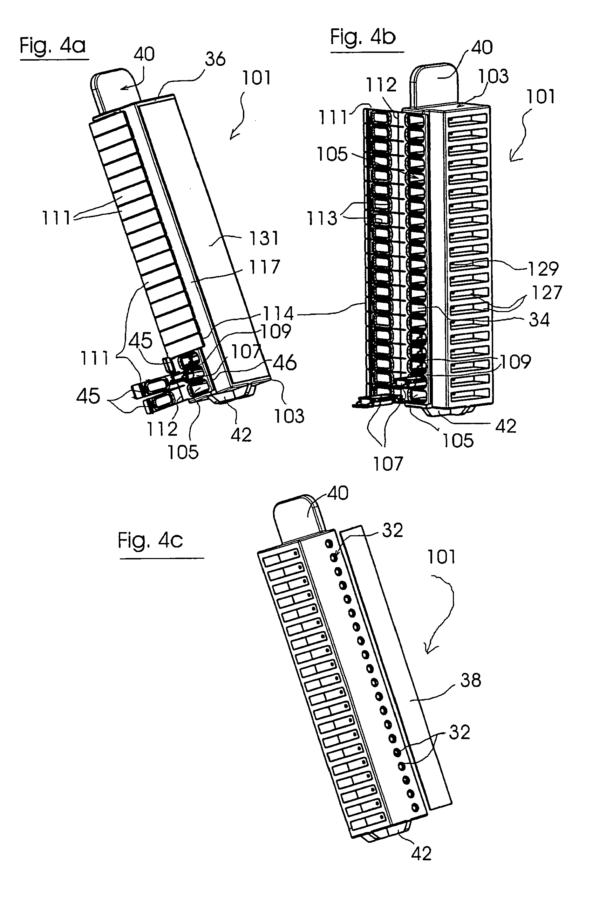

- Fig. 4a: die Verpackungskassette im teils geschlossenen Zustand mit Sicht auf die Vorderseite zeigt,
- Fig. 4b: die Verpackungskassette im vollständig geöffneten Zustand in einer der Fig. 4a ähnlichen Perspektive darstellt und
- Fig. 4c: die Verpackungskassette in einer Ansicht mit Blick auf die Rückseite darstellt.

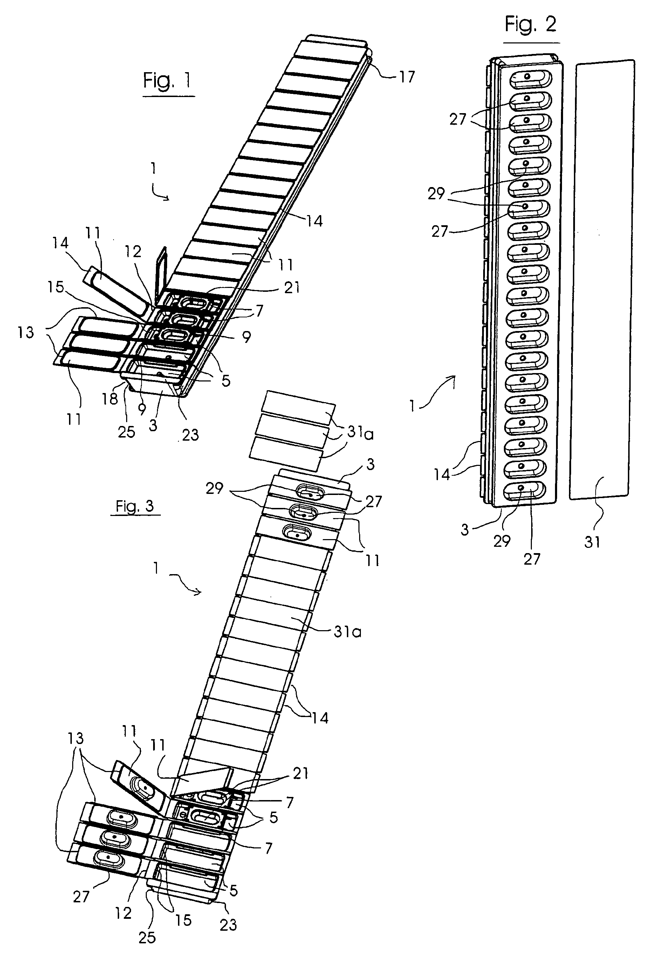

In Fig. 1 ist eine Verpackungskassette 1 gezeigt, die ein Basisgehäuse 3 mit 20 nebeneinander liegend angeordneten Abteilen 5 für Reagenzienträger 7 aufweist, wobei die Abteile 5 durch Trennwände 9 voneinander separiert sind. Jedem Abteil ist ein eigener Verschlussdeckel 11 zugeordnet, der ein wahlweises Verschließen bzw. Öffnen des betreffenden Abteils erlaubt. In Fig. 1 sind die im Zeichnungsblatt unteren fünf Abteile 5 im geöffneten Zustand dargestellt, wohingegen die restlichen Abteile 5 im geschlossenen Zustand gezeigt sind.

Die untersten beiden geöffneten Abteile 5 sind im Beispielsfall leer - also ohne Reagenzienträger - gezeigt, um die Muldenform der Abteile 5 im Basisgehäuse 3 besser erkennbar zu machen. In den restlichen geöffneten Abteilen 5 sind Reagenzienträger 7 eingezeichnet, um deren gesicherte Verpackungslage anzudeuten. Die Bestückung der Abteile 5 und die Entnahme der Reagenzienträger 7 aus den Abteilen 5 erfolgt bei dem gezeigten Ausführungsbeispiel normalerweise von oben her.

Das gezeigte Basisgehäuse 3 und die daran mittels Filmscharnieren 12 gelenkig angeordneten Verschlussdeckel 11 sind als zusammenhängende Einheit im Spritzgussverfahren hergestellt worden.

Die Verpackungskassette aus Fig. 1 und Fig. 2 ist zur Nutzung in i.W. horizontaler Ausrichtung bestimmt, so dass die Öffnungen der Abteile 5 oben und auf einer gemeinsamen horizontalen Ebene liegen.

Die Verschlussdeckel 11 haben eine der Randkontur der Abteilmulden 5 angepasste, ringförmig umlaufende Dichtlippe 13, die beim Schließen des Abteils in eine obere stufenartige Erweiterung 15 der Abteilmulde 5 in klemmenden Sitz kommt bzw. einschnappt. Auf diese Weise wird das betreffende Abteil 5 zuverlässig geschlossen und nach außen hin abgedichtet. Im geschlossenen Zustand der Abteile 5 stehen die Verschlussdeckel 11 mit einem an ihrem freien Ende vorgesehenen Laschenabschnitt 14 über den von den Verschlussdeckelgelenken 12 entfernten Rand 17 des Basisgehäuses 3 nach außen ab. Die Laschen 14 erleichtern das manuelle und maschinelle Ergreifen der Verschlussdeckel 11, um die Abteile 5 einzeln oder gruppenweise oder allesamt zu öffnen.

Die in Fig. 1 gezeigten Reagenzienträgerchips 7 weisen jeweils eine wan - nenartige Vertiefung 21 auf, deren Boden einen Testflächenbereich bildet, in dem eine Beschichtung mit immobilisierten Reagenzien für spätere Untersuchungen vorgesehen ist.

Die Längsseiten 17, 18 des Basisgehäuses 3 weisen eine in Längsrichtung durchgehende Führungsnut 23, 25 auf, mit denen die Verpackungskassette an Führungsschienen von Beschickungsautomaten bzw. Analyseautomaten geführt bewegbar ist. In der Unteransicht der Verpackungskassette 1 gemäß Fig. 2 ist zu erkennen, dass im Boden des Basisgehäuses 3 ebenfalls Mulden 27 eingeprägt sind, und zwar unter jedem Abteil jeweils eine unterseitige Mulde 27. Diese Mulden 27 dienen zur Aufnahme eines Trocken mittels, um die Abteile 5 trockenzuhalten. Zwischen diesen Trockenmittel reservoiren 27 und den ihnen zugeordneten Abteilen 5 ist ein Verbindungs loch 29 vorgesehen, damit etwaige Feuchtigkeit in einem betreffenden Abteil 5 zum Trockenmittelreservoir 27 gelangen kann. Das Ausführungsbeispiel nach Fig. 1 könnte dahingehend abgewandelt werden, dass Trennwände zwischen Trockenmittelreservoiren 27 entfallen, so dass größere Trocken mittelreservoire entstehen, die dann mehreren Abteilen 5 zugeordnet sind.

Nach außen hin sind die Mulden 27 mit einer in Fig. 2 gesondert dargestell - ten Versiegelungsfolie 31 abzudichten, bei der es sich z.B. um eine dampfundurchlässige Aluminium-kaschierte Siegelfolie handeln kann. Die Siegel - folie kann z.B. mit testspezifischen Informationen, Labels, Marken etc. bedruckt sein.

Das Beispiel in Fig. 3 unterscheidet sich von dem vorstehend beschriebenen Ausführungsbeispiel dadurch, dass Reservoirmulden 27 für Trockenmittel in den Verschlussklappdeckeln 11 vorgesehen sind. Die Reservoirmulden 27 sind so dimensioniert, dass sie in den Wannenbereich 21 der Reagenzienträgerchips 7 eingreifen können, wenn der betreffende Verschlussdeckel 11 in Schließstellung gebracht wird. Dies hat nicht nur den Vorteil, dass das Trocknungsmittel im Reservoir 27 nah an die trockenzuhaltenden Bereiche des Reagenzienträgerchips 7 herangeführt werden und dass ferner das Luftvolumen in den geschlossenen Abteilen 5 sehr klein gehalten ist. Zwischen den Trockenmittelreservoiren 27 und den Abteilen 5 sind Kommunikationslöcher 29 vorgesehen. Nach außen hin sind die Trockenmittelreservoire 27 mit Siegelfolienstreifen 31a abgedichtet, von denen drei im abgehobenen Zustand gezeigt sind, um die Reservoirmulden 27 deutlicher erkennbar zu machen. Die Siegelfolienstreifen 31a können mit Informationen bedruckt sein, etwa testspezifischen Informationen, Marken etc.

Im Übrigen ist die Verpackungskassette aus Fig. 3 im Wesentlichen wie die Verpackungskassette aus Fig. 1 ausgebildet. Es sind daher zur Kennzeichnung entsprechender Elemente in Fig. 3 die den funktional gleichen Elementen in Fig. 1 zugewiesenen Bezugszeichen verwendet worden. Es kann daher zum Verständnis der Fig. 3 im Wesentlichen auf die Beschreibung der Fig. 1 und 2 zurückgegriffen werden.

Ferner sei noch auf eine Variante hingewiesen, die der Verpackungskassette der Fig. 3 weitgehend entspricht, wobei jedoch die Mulden 27 in Fig. 3 keine Verbindungslöcher 29 zu den Abteilen 5 aufweisen und daher nicht als Trockenmittelreservoire dienen. Sie sind dennoch zweckmäßig, da sie das Luftraumvolumen der Abteile 5 verkleinern.

Diese letztgenannte Variante kann z.B. dazu eingerichtet sein, in den Mulden 27 Flüssigreagenzien oder Trockenreagenzien aufzunehmen, die den Reagenzienträgern zugeordnet sind. Im Falle einer solchen Abwandlung des in Fig. 3 gezeigten Beispiels sollten vorzugsweise vorpräparierte und zunächst geschlossene Kommunikationsöffnungen in den Böden der Mulden 27 vorgesehen sein. Diese dann z.B. zu durchstechenden und somit zu öffnenden Kommunikationsöffnungen erlauben dann den Durchtritt der betreffenden Flüssigreagenzien oder ggf. Trockenreagenzien zu den zugeordneten Reagenzienträgern und somit zu deren Testflächen.

In den Figuren 4a - 4c ist ein weiteres Ausführungsbeispiel einer Verpackungskassette nach der Erfindung in perspektivischen Darstellungen gezeigt. In den Figuren 4a - 4c sind Elemente, die ihrer Funktion nach Elementen in den Figuren 1 - 3 entsprechen, mit den betreffenden Bezugszahlen, erhöht um 100, gekennzeichnet.

Die Verpackungskassette 101 ist für eine Nutzung in aufrechter Anordnung ausgelegt, so dass die Reihe einander benachbarter Abteile 105 im Wesentlichen vertikal ausgerichtet ist. Im Unterschied zu den Ausführungsbeispielen nach den Figuren 1 und 2 liegen die Reagenzienträger 107 in ihrer Speicherposition in der Verpackungskassette 101 nicht in einer horizontalen Ebene seitlich nebeneinander, sondern in parallelen Ebenen übereinander. Die Abteile 105 in dem Basisgehäuse 103 sind als Schubfächer benutzbar, so dass die Reagenzienträger 107 in horizontaler Richtung in die Abteile 105 eingeschoben bzw. aus diesen herausgeschoben werden können. In Fig. 4c sind bei 32 Öffnungen in der Rückseite der Verpackungskassette 101 zu erkennen, durch welche hindurch ein Auswerferstift einen jeweiligen Reagenzienträger 107 aus der vorderen Öffnung 34 herausschieben und somit an eine Übergabeeinheit eines Analysesystems abgeben kann. Die Abteile 105 sind jedoch so gestaltet, dass sowohl das Einbringen als auch das Entnehmen von Reagenzienträgern durch die vorderen Öffnungen 34 mittels Greifvorrichtungen oder z.B. pneumatischer Saugheber erfolgen kann.

Die Reagenzienträger 107 aus Fig. 4b können den Reagenzienträgern aus Fig. 1 entsprechen.

Die durch die Trennwände 109 voneinander separierten Abteile 5 sind einzeln zu öffnen bzw. zu verschließen, wozu die Verschlussdeckel 111 vorgesehen sind. Diese Verschlussdeckel 111 sind prinzipiell genauso aufgebaut wie die Verschlussdeckel 111 in Fig. 1. Die Verschlussdeckel 111 sind über Filmscharniere 112 mit dem Basisgehäuse 103 verbunden, so dass sie in der Anordnung gemäß Fig. 4b um ihre vertikalen Gelenkachsen geklappt werden können, um die Abteile 105 zu verschließen bzw. zu öffnen. In Fig. 4b ist auch zu erkennen, dass die Verschlussdeckel 111 einen der Randkontur der Öffnungen 34 angepassten Dichtring 113 aufweisen, der beim Schließen des betreffenden Abteils 105 in klemmenden Sitz an der bertreffenden Öffnung 34 kommt bzw. einschnappt. Im geschlossenen Zustand der Abteile 105 stehen die Verschlussdeckel 111 mit einem an ihrem freien Ende vorgesehenen Laschenabschnitt 114 über den von den Verschlussdeckelgelenken 112 entfernten Rand 117 des Basisgehäuses 103 nach außen ab. Die Laschen 114 erleichtern das manuelle und maschinelle Ergreifen der Verschlussdeckel 111, um die Abteile 105 einzeln oder gruppenweise oder allesamt zu öffnen. Mit 45 ist in Fig. 4a ein Schnappverbindungselement in Form eines vom Deckel 111 abstehenden Schnapphakens bezeichnet, der beim Schließen eines betreffenden Deckels 111 eine als komplementäres Schnappverbindungselement vorgesehene Leiste 46 auf der Vorderseite des Gehäuses 103 in Schnappeingriff nimmt. Die Schnappverbindung 45, 46 sichert die Abdichtung der Abteile 5 im geschlossenen Zustand.

Wie in Fig. 4b erkennbar, ist jedem Abteil 105 ein horizontal seitlich daneben liegendes Trockenmittelreservoir 127 zugeordnet, welches über ein Verbindungsloch 129 mit dem betreffenden Abteil 105 kommuniziert. Eine erste Versiegelungsfolie 131 dichtet die Trockenmittelreservoire 127 nach außen ab. In Fig. 4a ist diese Versiegelungsfolie 131 im aufgeklebten Zustand auf der die Trockenmittelreservoiröffnungen aufweisenden Seite 36 des Basisgehäuses 103 gezeigt. In den Figuren 4b und 4c ist die Versiegelungsfolie 131 aus Gründen der übersichtlicheren Darstellung nicht eingezeichnet.

Es sei noch darauf hingewiesen, dass auch die Auswerferöffnungen 32 mittels einer Versiegelungsfolie zu verschließen sind, die in Fig. 4c im noch nicht aufgeklebten Zustand neben dem Basisgehäuse 103 dargestellt und mit dem Bezugszeichen 38 gekennzeichnet ist.

Ein oberer Handgriff 40 dient der erleichterten manuellen oder ggf. auch maschinellen Handhabung der Verpackungskassette 101. Am unteren Ende ist noch ein Zentrierstern 42 vorgesehen, welcher der genauen Positionierung des Basisgehäuses 103 im Analysesystem oder ggf. in einem Bestückungsautomaten dient.

Das Basisgehäuse 103 ist vorzugsweise einstückig mit den Verschlussdeckelklappen 111 ausgebildet und z.B. im Spritzgussverfahren hergestellt worden. Es besteht daher vorzugsweise aus einem Kunststoff. Bei einer nicht gezeigten Variante des Ausführungsbeispiels aus den Fig. 4a - 4c können zwei oder mehrere Reihen übereinander angeordneter Abteile vorgesehen sein, so dass die Abteile in Draufsicht eine zweidimensionale Matrix bilden. Denkbar wäre auch eine Abwandlung des Ausführungsbeispiels aus den Fig. 4a - 4b, gemäß welcher in jeder Ebene zwei hintereinander liegende Abteile vorgesehen sind, deren Deckel an einander entgegengesetzten Seiten des Basisgehäuses angeordnet sind.

Das Ausführungsbeispiel nach den Fig. 4a - 4c ist so dimensioniert, dass jedes Abteil nicht mehr als einen Reagenzienträger 107 aufnehmen kann. In einer Variante des Ausführungsbeispiels kann es vorgesehen sein, dass zwei oder mehr Reagenzienträger 107 in ein Abteil 105 hineinpassen.

Die Verpackungskassette nach der Erfindung ist automatengängig und damit geeignet, den kompletten Reagenzienträger-Lebenslauf von der Spritzgussproduktion über die Beschichtung bis zur Prozessierung auf einem Kundengerätesystem und der dortigen Entsorgung zu begleiten.

Dies könnte in der folgenden Weise der Fall sein:
- die noch unbeschichteten Reagenzienträgerkörper werden manuell oder automatisiert in die Verpackungskassette eingelegt und die Abteile werden geschlossen;
- die Reagenzienträger werden in der Verpackungskassette zur Beschichtungsanlage transportiert;
- die Kassettendeckel werden vollautomatisch geöffnet und die Reagenzienträger werden von der Kassette auf einen Beschichtungsschlitten umgesetzt;
- die Reagenzienträger werden nach der Beschichtung vollautomatisch vom Beschichtungsschlitten in die Verpackungskassette zurücküberführt und die Kassettenabteile werden durch Herunterklappen der Verschlussdeckel verschlossen;
- alternativ könnte es vorgesehen sein, dass die Reagenzienträger in der Verpackungskassette beschichtet werden, also während des Beschichtungsvorgangs in der Verpackungskassette verbleiben;
- die Verpackungskassette wird mit Trockenmittel präpariert und beschriftet;
- die Kassette wird in eine Umverpackung geladen;
- die Kassette mit den präparierten Reagenzienträgern wird zum Kunden transportiert;
- der Kunde bringt die Kassette mit den Reagenzienträgern in sein Analysesystem ein;
- in dem Analysesystem erfolgt vollautomatisches Öffnen der einzelnen Verschlussdeckel und die Entnahme betreffender Reagenzienträger aus der Verpackungskassette zum Zwecke der Prozesseinschteusung;
- das Analysegerät verwirft nach der Prozessierung und somit Durchführung von Untersuchungen an allen Reagenzienträgern die Reagenzienträger und die Kassette in den Behälter für Recycling-Müll.

Im Beispielsfall der Figuren 1 - 4 waren die Verschlussdeckel mit einer Dichtlippe zur Abdichtung der Abteile und zur Sicherung des Verschlusszustandes versehen. Alternativ oder zusätzlich könnte z. B. auch eine "Wulst"-Verbindung zur Abdichtung vorgesehen sein.

Bei den vorstehend besprochenen Ausführungsbeispielen war für jeden einzelnen Chip ein eigenes Abteil vorgesehen.

Eine weitere Ausführungsform sieht vor, dass pro Abteil zwei oder mehrere Chips unterzubringen sind.

Ferner kann es vorgesehen sein, dass zwischen Abteilen Sollbruchstellen vorgesehen sind, die es ermöglichen, die Kassette bei Bedarf zu teilen.

Eine weitere, nicht gezeigte Ausführungsform einer Verpackungskassette nach der Erfindung hat einen kreisförmigen oder ringförmigen Aufbau, wie er z.B. erhalten werden könnte, wenn man die i. W. geradlinige Kassette aus Fig. 1 oder Fig. 3 in einer zum Bogen oder Kreis gekrümmten Variante abwandeln würde. Dies kann eine flache Karussell-Variante mit oben liegenden Verschlussdeckeln oder eine Trommel-Variante mit seitlich am Trommelumfang liegenden Verschlussdeckeln sein.

## Patentansprüche

1. Kombination aus Verpackungskassette und Reagenzienträgerchips, die jeweils eine wannenartige Vertiefung (21) aufweisen, deren Boden einen Testflächenbereich bildet, in dem eine Beschichtung mit immobilisierten Reagenzien vorgesehen ist, wobei die Verpackungskassette (1; 101) ein Basisgehäuse (3; 103) mit zusammenhängend einander benachbart, insbesondere nebeneinander oder/und übereinander angeordneten Abteilen (5; 105) aufweist, in denen ein jeweiliger oder mehrere jeweilige Reagenzienträgerchips (7; 107) aufgenommen sind, wobei die Abteile (5; 105) durch Trennwände (9; 109) voneinander separiert und einzeln zu öffnen sind und jedes Abteil (5; 105) einen eigenen Verschlussdeckel (11; 111) aufweist, der ein Wiederverschließen des Abteils (5; 105) ermöglicht, wobei die Verschlussdeckel (11; 111) Klappendeckel sind, die gelenkig an dem Basisgehäuse (3; 103) befestigt sind und das Basisgehäuse (3; 103) und die Klappendeckel (11; 111) einstückig zusammenhängend, insbesondere als einteiliges Spritzgussprodukt, gefertigt sind, wobei jedem Abteil (5) ein Trockenmittelreservoir (27; 127) zugeordnet ist, wobei das Trockenmittelreservoir (27) im Bodenbereich des Basisgehäuses (3) vorgesehen ist, wobei jedes Trockenmittelreservoir (27; 127) einem oder mehreren Abteilen (5) zugeordnet ist und zwischen diesen Trockenmittelreservoiren (27, 127) und den ihnen zugeordneten Abteilen (5) jeweils ein Verbindungsloch (29) vorgesehen ist.

2. Kombination nach Anspruch 1, wobei die Verschlussdeckel (11; 111) und das Basisgehäuse (3; 103) einander zugeordnete und komplementäre Verschlusselemente (13, 15; 113, 115) aufweisen, die beim Verschließen der Abteile (5; 105) mittels der Verschlussdeckel (11; 111) abdichtend miteinander in Eingriff kommen.

3. Kombination nach einem der Ansprüche 1 bis 2, wobei jeder Verschlussdeckel (11; 111) eine Betätigungslasche (14; 114) aufweist, wobei die Betätigungslaschen (14; 114) der einer Reihe von Abteilen (5; 105) zugeordneten Verschlussdeckel (11; 111) im Schließzustand der Reihe nach nebeneinander bzw. übereinander liegend über einen Rand (17; 117) des Basisgehäuses (3; 103) hinaus nach außen abstehen.

4. Kombination nach einem der vorhergehenden Ansprüche, wobei die Verpackungskassette (1) eine Basisplatte (3) umfasst, in der die Abteile (5) sämtlich oder ggf. gruppenweise als in Reihe zueinander ausgerichtete Mulden ausgebildet sind.

5. Kombination nach einem der vorhergehenden Ansprüche, wobei die Abteile (5) so dimensioniert und platzbedarfsoptimiert sind, dass sie jeweils nur einen einzelnen Reagenzienträgerchip (7) und ggf. einen Trockenmittelvorrat enthalten.

6. Kombination nach einem der vorhergehenden Ansprüche, wobei das jeweilige Trockenmittelreservoir (27) eine muldenförmige Einprägung in der Verpackungskassette (1; 101) oder im Verschlussdeckel (11; 111) ist, die nach außen durch eine Versiegelungsfolie abgedichtet ist.

7. Kombination nach einem der vorhergehenden Ansprüche, wobei die Verpackungskassette aus einem Kunststoff gefertigt ist.

## Claims

1. Combination of a packaging cassette and reagent carrier chips, each comprising a basin-like depression (21) where the bottom forms a test surface where a coating with immobilized reagents is provided, the packaging cassette (1; 101) comprising a base housing (3; 103) with connected adjacent compartments (5; 105), in particular arranged side by side or/and one on top of the other, in which a corresponding or several corresponding reagent carrier chips (7; 107) are received, wherein the compartments (5; 105) are separated by partitions (9; 109) and can be opened individually and wherein each compartment (5; 105) has a respective sealing cover (11; 111) which enables resealing of the compartment (5; 105), wherein the sealing covers (11; 111) are flap lids which are hinge-mounted at the base housing (3; 103) and wherein the base housing (3; 103) and the flap lids (11; 111) are manufactured interconnected in one piece, in particular as a one piece injection-moulded product, wherein a desiccant reservoir (27; 127) is allocated to each compartment (5), wherein the desiccant reservoir (27) is provided in the bottom area of the base housing (3) and wherein each desiccant reservoir (27; 127) is allocated to one or more compartments (5) and wherein a connecting hole (29) is provided between said desiccant reservoirs (27; 127) and the associated compartments (5).

2. Combination according to claim 1, wherein the sealing covers (11; 111) and the base housing (3; 103) have closure elements (13, 15; 113, 115) that are assigned and complementary to one another and sealingly engage one another when each of the compartments (5; 105) are closed by their respective sealing covers (11; 111).

3. Combination according to one of claims 1 to 2, wherein each sealing cover (11; 111) comprises an operating tab (14; 114), wherein the operating tabs (14; 114) of the sealing covers (11; 111) assigned to one row of compartments are next to one another or above one another in sequence and project beyond one edge (17; 117) of the base housing (3; 103) towards the outside in the closed state.

4. Combination according to one of the preceding claims, wherein the packaging cassette (1) comprises a base plate (3) in which all the compartments (5) or optionally groups of compartments are in the form of depressions that are aligned in a row relative to one another.

5. Combination according to one of the preceding claims, wherein the compartments (5) are dimensioned and optimized regarding space requirements to hold only one single reagent carrier chip (7) and optionally a store of desiccant.

6. Combination according to one of the preceding claims, wherein the corresponding desiccant reservoir (27) is a trough-shaped impression in the packaging cassette (1; 101) or in the sealing cover (11; 111) which to the outside is sealed by a sealing foil.

7. Combination according to one of the preceding claims, wherein the packaging cassette is made of a plastic.

## Revendications

1. Combinaison d'une cassette d'emballage et d'une puce support de réactifs, comprenant chacun une dépression (21) en forme de bac, dont le fond forme une région de surface de test, où une couche de réactifs immobilisés est prévue, la cassette d'emballage (1; 101) comprenant un boîtier de base (3; 103) avec des compartiments (5; 105) adjacents connectés, en particulier l'un à côté de l'autre ou l'un sur l'autre, dans lesquels une ou plusieurs puces support de réactifs sont reçus, les compartiments (5; 105) étant séparés par des cloisons de séparation (9; 109) et étant ouvrables individuellement et chaque compartiment (5; 105) comprenant son propre couvercle de fermeture (11; 111) qui permet de refermer le compartiment (5; 105), les couvercles de fermeture (11; 111) étant des couvercles rabattables attachés de façon articulée au boîtier de base (3; 103) et le boîtier de base (3; 103) et les couvercles de fermeture (11; 111) étant connectés en une seule pièce, en particulier sous forme de produit moulé par injection en une seule pièce, un réservoir de desséchant (27; 127) étant assigné à chaque compartiment (5), le réservoir de desséchant (27) étant prévu dans la région du fond du boîtier de base (3), chaque réservoir de desséchant (27; 127) étant assigné à un ou plusieurs compartiments (5), et une ouverture de connexion (29) étant prévue entre ces réservoirs de desséchant (27; 127) et leurs compartiments assignés (5).

2. Combinaison selon la revendication 1, les couvercles de fermeture (11; 111) et le boîtier de base (3; 103) comprenant des éléments de fermeture (13, 15 ; 113, 115) assignés et complémentaires l'un à l'autre, qui viennent en engagement de manière étanche l'un dans l'autre lorsque les compartiments (5; 105) sont fermés par les couvercles de fermeture (11; 111).

3. Combinaison selon une des revendications 1 à 2, chaque couvercle de fermeture (11; 111) comprenant une patte d'actionnement (14; 114), les pattes d'actionnement (14; 114) des couvercles de fermeture (11; 111) assignées à une rangée de compartiments (5; 105) étant, dans l'état de fermeture, arrangées l'une après l'autre ou l'une sur l'autre en s'étendant en saillie vers l'extérieur au-delà d'un bord (17 ; 117) du boîtier de base (3; 103).

4. Combinaison selon une des revendications précédentes, la cassette d'emballage (1) comprenant une plaque de base (3) dans laquelle tous les compartiments (5) ou éventuellement des groupes de compartiments sont adaptés sous forme de dépressions alignées l'une par rapport à l'autre en une rangée.

5. Combinaison selon une des revendications précédentes, les compartiments (5) étant dimensionnés et optimisés quant à l'espace nécessaire de sorte qu'ils ne contiennent qu'une seule puce de support de réactifs (7) et éventuellement une réserve de desséchant.

6. Combinaison selon une des revendications précédentes, le réservoir de desséchant (27) étant une empreinte sous forme de dépression dans la cassette d'emballage (1 ; 101) ou dans le couvercle de fermeture (11; 111), qui vers l'extérieur est scellé par un film d'étanchéité.

7. Combinaison selon une des revendications précédentes, la cassette d'emballage étant fabriquée en matière plastique.
